(19) Europäisches Patentamt
European Patent Office
Office européen des brevets

(11) **EP 4 063 328 A1**

(12) **EUROPEAN PATENT APPLICATION**

(43) Date of publication:
**28.09.2022 Bulletin 2022/39**

(21) Application number: **22163611.1**

(22) Date of filing: **22.03.2022**

(51) International Patent Classification (IPC):
*C01G 53/00* (2006.01)   *H01M 4/04* (2006.01)
*H01M 4/131* (2010.01)   *H01M 4/36* (2006.01)
*H01M 4/525* (2010.01)   *H01M 4/62* (2006.01)
*H01M 10/052* (2010.01)

(52) Cooperative Patent Classification (CPC):
**C01G 53/50; C01G 53/006; H01M 4/0471;
H01M 4/131; H01M 4/364; H01M 4/525;
H01M 4/62; H01M 4/624; H01M 10/052;**
C01P 2004/84; H01M 2004/028

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.03.2021 KR 20210038708**

(71) Applicant: **SK On Co., Ltd.
Seoul 03188 (KR)**

(72) Inventors:
• **KWEON, Hee Jun**
  **34124 Daejeon (KR)**
• **YOO, Yeong Bin**
  **34124 Daejeon (KR)**
• **CHOI, Ji Hoon**
  **34124 Daejeon (KR)**
• **HAN, Kook Hyun**
  **34124 Daejeon (KR)**

(74) Representative: **Stolmár & Partner
Patentanwälte PartG mbB
Blumenstraße 17
80331 München (DE)**

(54) **CATHODE ACTIVE MATERIAL FOR LITHIUM SECONDARY BATTERY AND LITHIUM SECONDARY BATTERY INCLUDING THE SAME**

(57)   A cathode active material for a lithium secondary battery according to an embodiment of the present invention includes a lithium-transition metal composite oxide particle having a single particle shape, and a first coating layer formed on a surface of the lithium-transition metal composite oxide particle. The first coating layer includes a Sr-Zr-O compound. Life-span and capacity properties are improved by a combination of the lithium-transition metal composite oxide particle having the single particle shape and the first coating layer formed thereon.

EP 4 063 328 A1

**Description**

CROSS-REFERENCE TO RELATED APPLICATION

This application claims priority to Korean Patent Application No. 10-2021-0038708 filed on March 25, 2021 in the Korean Intellectual Property Office (KIPO), the entire disclosure of which is incorporated by reference herein.

BACKGROUND

1. Field

The present invention relates to a cathode active material for a lithium secondary battery and a lithium secondary battery including the same. More particularly, the present invention relates to a cathode active material including a lithium-transition metal composite oxide and a lithium secondary battery including the same.

2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of an electric automobile, a hybrid vehicle, etc.

The secondary battery includes, e.g., a lithium secondary battery, a nickel-cadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape.

A lithium metal oxide may be used as a cathode active material of the lithium secondary battery which may preferably provide high capacity, high power and enhanced life-span property. However, when the lithium metal oxide is designed to have a high-power composition, thermal and mechanical stability may be deteriorated to cause deterioration of the life-span property and operational reliability of the lithium secondary battery.

For example, Korean Published Patent Application No. 10-2017-0093085 discloses a cathode active material including a transition metal compound and an ion adsorption binder, which may not provide sufficient life-span and stability.

SUMMARY

According to an aspect of the present invention, there is provided a cathode active material for a lithium secondary battery having improved operational stability and reliability.

According to an aspect of the present invention, there is provided a lithium secondary battery including a cathode active material with improved operational stability and reliability.

A cathode active material for a lithium secondary battery includes a lithium-transition metal composite oxide particle having a single particle shape, and a first coating layer formed on a surface of the lithium-transition metal composite oxide particle. The first coating layer includes a Sr-Zr-O compound.

In some embodiments, the cathode active material may further include a second coating layer formed on the surface of the first coating layer. The second coating layer may include a Li-B-O compound.

In some embodiments, the Sr-Zr-O compound may be derived from a first melting agent containing strontium and a second melting agent containing zirconium.

In some embodiments, the first melting agent may include $Sr(OH)_2$ or a hydrate of $Sr(OH)_2$, and the second melting agent may include $Zr(OH)_2$ or a hydrate of $Zr(OH)_2$.

In some embodiments, a crystallite size of the lithium-transition metal composite oxide particle measured by an XRD analysis may be in a range from 300 nm to 500 nm, and the crystallite size is calculated by Equation 1:

$$[\text{Equation 1}]$$

$$L = \frac{0.9\lambda}{\beta cos\theta}$$

In Equation 1, L is the crystallite size, $\lambda$ is an X-ray wavelength (nm), $\beta$ is a full width at half maximum of a (003) plane, and $\theta$ is a diffraction angle (rad).

In some embodiments, an average particle diameter (D50) of the lithium-transition metal composite oxide particle may be less than 3.0 $\mu$m.

In some embodiments, the Sr-Zr-O compound may be doped or coated with a metal, and the metal may be at least one of Mg, Ca, Al, Ti, W, Ta and Nb.

In some embodiments, the single particle shape may include a monolithic shape in which 2 to 10 single particles are attached or adjacent to each other.

In some embodiments, a Sr peak may be observed at 133.6 eV and a Zr peak may be observed at 182.8 eV when the surface of the lithium-transition metal composite oxide particle is measured by an X-ray photoelectron spectrometer (XPS) analysis.

In some embodiments, wherein the Sr-Zr-O compound includes a perovskite structure.

In a method of preparing a cathode active material for a lithium secondary battery, a lithium precursor and a transition metal precursor are prepared. The lithium precursor, the transition metal precursor, a first melting agent and a second melting agent are mixed. The mixture including the lithium precursor, the transition metal precursor, the first melting agent and the second melting agent are fired to form a lithium-transition metal composite oxide particle including a first coating layer on a surface thereof. The first coating layer includes a Sr-Zr-O compound.

In some embodiments, the first melting agent may have an average particle diameter (D50) of 1 $\mu$m or less.

In some embodiments, the first melting agent may include $Sr(OH)_2$ or a hydrate of $Sr(OH)_2$, and the second melting agent may include $Zr(OH)_2$ or a hydrate of $Zr(OH)_2$. A strontium content included in the first melting agent may be from 300 ppm to 2,000 ppm based on a total weight of the lithium-transition metal composite oxide particle.

In some embodiments, a zirconium content in the second melting agent may be from 300 ppm to 2,000 ppm based on the total weight of the lithium-transition metal composite oxide particle.

In some embodiments, boron may be added and a heat treatment may be performed to form a second coating layer including a Li-B-O compound on a surface of the first coating layer.

In some embodiments, a metal hydroxide may be further added in the mixing the lithium precursor, the transition metal precursor, the first melting agent and the second melting agent, and the metal hydroxide may be a hydroxide of at least ones of Mg, Ca, Al, Ti, W, Ta and Nb.

In some embodiments, the lithium-transition metal composite oxide particle may be represented by Chemical Formula 1.

[Chemical Formula 1]   $Li_aNi_xM_{1-x}O_{2+y}$

In Chemical Formula 1, $0.9 \leq a \leq 1.5$, $0.6 \leq x \leq 0.99$, $-0.1 \leq y \leq 0.1$, and M may be at least one element selected from the group consisting of Na, Mg, Ca, Y, Ti, Zr, Hf, V, Nb, Ta, Cr , Mo, W, Mn, Co, Fe, Cu, Ag, Zn, B, Al, Ga, C, Si, Sn and Zr.

In some embodiments, a temperature at which the firing is performed may be in a range represented by Equations 2 and 3.

$$[Equation\ 2]$$

$$t1-15 \leq T1(°C) \leq t1+15$$

In Equation 2, t1 is a temperature represented by Equation 3 below, and T1 is the temperature at which the firing is performed

$$[Equation\ 3]$$

$$t1(°C) = (-520)*x + 1285$$

In Equation 3, x is the same as x in Chemical Formula 1.

A lithium secondary battery includes a cathode including a cathode active material layer that includes the cathode active material for a lithium secondary battery of embodiments as described above, and an anode facing the cathode.

The cathode active material according to embodiments of the present invention may include a lithium-transition metal composite oxide particle having a single particle shape, and a first coating layer formed on a surface of the lithium-transition metal composite oxide particle and including an Sr-Zr-O compound. The Sr-Zr-O compound may include a perovskite structure.

The lithium-transition metal composite oxide particle may have the single particle shape, so that cracks in the lithium-transition metal composite oxide particle may be prevented, and a BET surface area at which the cathode active material reacts with an electrolyte may be decreased. Accordingly, life-span properties such as a capacity retention of the secondary battery may be improved. Additionally, an electrical conductivity at the surface of the lithium-transition metal composite oxide particle may be increased by the first coating layer, enhanced power of the secondary battery may be maintained.

In some embodiments, a second coating layer including a Li-B-O compound may be formed on the surface of the first coating layer. In this case, the power and capacity properties of the secondary battery may be improved according to a further improvement of an ion conductivity.

In a method for preparing a cathode active material according to embodiments of the present invention, a melting agent may be mixed with a lithium precursor and a transition metal precursor, and then annealed. The formation of the melting agent may be facilitated, and the first coating layer may be formed on the surface of the single particle. Accordingly, the above-described effect from the single particle and the first coating layer may be implemented.

BRIEF DESCRIPTION OF THE DRAWINGS

FIGS. 1A and 1B are schematic cross-sectional views illustrating a cathode active materials in accordance with exemplary embodiments.

FIG. 2 is an SEM (Scanning Electron Microscopy) image for measuring a particle size of a lithium-transition metal composite oxide particle in accordance with exemplary embodiments.

FIG. 3 is a process flow diagram illustrating a method of preparing a cathode active material in accordance with exemplary embodiments.

FIG.4 is an SEM image for describing a pulverization process of a melting agent in accordance with exemplary embodiments.

FIG.5 is a schematic flowchart for describing a formation of a cathode active material in accordance with exemplary embodiments.

FIGS. 6 and 7 are a schematic plan view and a cross-sectional view, respectively, of a lithium secondary battery in accordance with exemplary embodiments.

FIG. 8 is SEM images of surfaces of cathode active materials according to Example 1, Example 9, Comparative Example 1 and Comparative Example 2.

FIG. 9 is a graph obtained by measuring element signals on a surface of a cathode active material of Example 1 through an XPS (X-ray Photoelectron Spectroscopy) analysis.

FIGS. 10 and 11 are graphs showing capacity changes while repeating charge and discharge of secondary batteries according to Examples and Comparative Examples.

DETAILED DESCRIPTION OF THE EMBODIMENTS

According to exemplary embodiments of the present invention, a cathode active material including a lithium-transition metal composite oxide particle and a lithium secondary battery including the same are provided.

Hereinafter, embodiments of the present invention will be described in detail with reference to the accompanying drawings. However, those skilled in the art will appreciate that such embodiments described with reference to the accompanying drawings are provided to further understand the spirit of the present invention and do not limit subject matters to be protected as disclosed in the detailed description and appended claims.

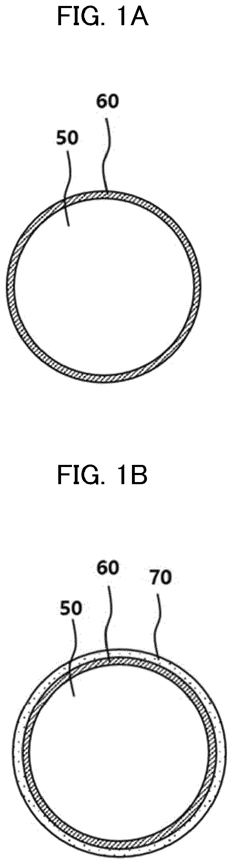

FIGS. 1A and 1B are schematic cross-sectional views illustrating a cathode active materials in accordance with exemplary embodiments. Specifically, FIG. 1A is a cross-sectional view illustrating a cathode active material in which a first coating layer is formed on a surface of a lithium-transition metal composite oxide particle. FIG. 1B is a cross-sectional view illustrating a cathode active material in which a first coating layer is formed on the surface of the lithium-transition metal composite oxide particle and a second coating layer is formed on a surface of the first coating layer.

Referring to FIGS. 1A and 1B, in exemplary embodiments, the cathode active material may include a lithium-transition metal composite oxide particle 50 having a single particle shape and a first coating layer 60 formed on a surface of the lithium-transition metal composite oxide particle 50. The first coating layer 60 may include a Sr-Zr-O compound.

As used herein, the term "single particle shape" is used to exclude a secondary particle formed by aggregation of a plurality of primary particles. For example, the lithium-transition metal composite oxide particles 50 may substantially consist of particles of the single particle shape, and the secondary particle structure in which primary particles (e.g., the number of the primary particles in the secondary particle is greater than 10, 20 or more, 30 or more, 40 or more, 50 or more, etc.) are assembled or aggregated may be excluded.

The term "single particle shape" is not intended to exclude a monolithic shape in which, e.g., 2 to 10 particles of the single particle shape are attached or adjacent to each other.

In some embodiments, the lithium-transition metal composite oxide particle 50 may include a structure in which a plurality of primary particles are integrally merged together and are substantially converted into the single particle.

For example, the lithium-transition metal composite oxide particle 50 may have a granular or spherical single particle shape.

For example, the lithium-transition metal composite oxide particle 50 may include nickel (Ni), and may further include at least one of cobalt (Co) and manganese (Mn).

For example, the lithium-transition metal composite oxide particle 50 may be represented by Chemical Formula 1 below.

$$[\text{Chemical Formula 1}] \qquad Li_aNi_xM_{1-x}O_{2+y}$$

In Chemical Formula 1, $0.9 \leq a \leq 1.5$, $0.6 \leq x \leq 0.99$, and $-0.1 \leq y \leq 0.1$. M may represent at least one element selected from Na, Mg, Ca, Y, Ti, Zr, Hf, V, Nb, Ta, Cr, Mo, W, Mn, Co, Fe, Cu, Ag, Zn, B, Al, Ga, C, Si, Sn and Zr.

In some preferable embodiments, the molar ratio or concentration of Ni (x) in Chemical Formula 1 may be 0.8 or more, more preferably greater than 0.8. In an embodiment, x may be 0.98 or more.

For example, if a high-Ni composition where x is 0.8 or more is employed, an annealing of the lithium-transition metal composite oxide particle 50 may be performed at a relatively low temperature. Accordingly, in a manufacturing process of the cathode active material for a lithium secondary battery to be described later, the lithium-transition metal composite oxide particle 50 having the single particle shape may be formed at a relatively low temperature.

Ni may serve as a transition metal related to power and capacity of the lithium secondary battery. Accordingly, the high-Ni composition may be employed in the lithium-transition metal composite oxide particle 50 as described above, so that a high-power cathode and a high-power lithium secondary battery may be implemented.

However, as the content of Ni is increased, long-term storage stability and life-span stability of the cathode or the secondary battery may be relatively deteriorated. However, according to exemplary embodiments, life-span stability and capacity retention may be improved by using Mn while maintaining electrical conductivity by including Co.

For example, the lithium-transition metal composite oxide particle may be formed in the form of a secondary particle including primary particles densely agglomerated therein. In this case, micro-cracks may be formed at an inside of the secondary particle during charging and discharging of the battery, and a side reaction between an electrolyte and the cathode active material may be accelerated to generate a gas from an inside of the battery. As a result, the life-span stability of the secondary battery may be deteriorated as charging and discharging are repeated.

According to exemplary embodiments of the present invention, the lithium-transition metal composite oxide particle 50 may have the single particle shape. Thus, cracks of the particles may be reduced, and a BET surface area reacting with the electrolyte may also be reduced. Accordingly, the life-span and capacity retention properties of the secondary battery may be improved during repeated charging and discharging.

For example, firing may be performed at a relatively low temperature to form the high-Ni lithium-transition metal composite oxide particle 50 having the single particle shape. However, in this case, an amount of a residual lithium on the surface of the lithium-transition metal composite oxide particle 50 may increase, and an electrical conductivity at the particle surface may be degraded. Accordingly, power and capacity properties of the secondary battery may be slightly degraded.

According to exemplary embodiments of the present invention, the first coating layer 60 including a strontium-zirconium-oxygen (Sr-Zr-O) compound may be formed on the surface of the lithium-transition metal composite oxide particle 50. Accordingly, the electrical conductivity at the surface of the lithium-transition metal composite oxide particle 50 may be enhanced. Therefore, deterioration of the power and capacity properties may be prevented while forming the high-Ni cathode active material in the single-particle shape.

For example, the Sr-Zr-O compound may include various types of compounds containing Sr, Zr, and O.

In exemplary embodiments, the first coating layer 60 may have a perovskite structure. Accordingly, the electrical conductivity at the surface of the lithium-transition metal composite oxide particle 50 may be further improved, so that power property of the secondary battery may be enhanced.

For example, the term "perovskite structure" used herein indicates a 3-dimensional crystal structure formed by combining two types of cations and one type of anion, which may be commonly known in the related art.

In some embodiments, as illustrated in FIG. 1B, the second coating layer 70 including the Li-B-O compound having an ion conductivity may be formed on a surface of the above-described first coating layer 60. In this case, the electrical conductivity may be improved by the first coating layer 60, and an ion conductivity may also be improved by the second coating layer 70. Accordingly, the power and capacity properties of the secondary battery may be further improved.

In some embodiments, the Sr-Zr-O compound included in the first coating layer 60 may be derived from a first melting agent including strontium and a second melting agent including zirconium.

In some embodiments, a hydrate of $Sr(OH)_2$ or $Sr(OH)_2$ may be used as the first melting agent, and a hydrate of $Zr(OH)_2$ or $Zr(OH)_2$ may be used as the second melting agent. For example, the hydrate of $Sr(OH)_2$ may be $Sr(OH)2\cdot8H_2O$.

For example, the first melting agent and the second melting agent may be added in a fabrication of the lithium-transition metal composite oxide particle 50 to be described later. The first melting agent (e.g., the hydrate of $Sr(OH)_2$ or $Sr(OH)_2$) and the second melting agent (e.g., the hydrate of $Zr(OH)_2$ or $Zr(OH)_2$) may react with a lithium precursor (e.g., LiOH) to form a single particle-shaped lithium-transition metal composite oxide particle 50, and the first coating layer 60 may be formed on the surface of the lithium-transition metal composite oxide particle 50. Accordingly, a sufficient electrical conductivity may be obtained while forming the cathode active material having the single-particle structure with the high-Ni composition.

In some embodiments, a crystallite size of the lithium-transition metal composite oxide particle 50 measured by an X-ray diffraction (XRD) analysis may be in a range from 300 nm to 500 nm. Within the range of the crystallite size, the lithium-transition metal composite oxide particle 50 having the form single particle shape may be formed while prevention degradation of durability and generation of cracks in the cathode active material due to an excessively small particle size.

In exemplary embodiments, "the crystallite size" is a value measured by the XRD analysis. The crystallite size may be obtained by a calculation using Scherrer equation (as shown in Equation 1 below) that includes a full width at half maximum (FWHM) obtained through the XRD analysis.

[Equation 1]

$$L = \frac{0.9\lambda}{\beta cos\theta}$$

In the Equation 1 above, L is the crystallite size, $\lambda$ is an X-ray wavelength (nm), $\beta$ is the FWHM of a corresponding peak (rad), and $\theta$ is a diffraction angle (rad). In exemplary embodiments, the FWHM in the XRD analysis for measuring the crystallite size may be measured from a peak of a (003) plane.

In some embodiments, in the Equation 1 above, $\beta$ may be a FWHM correcting a value derived from a device. In an embodiment, Si may be used as a standard material for reflecting the device-derived value. In this case, a FWHM profile of Si over an entire $2\theta$ range may be fitted, and the device-derived FWHM may be expressed as a function of $2\theta$. Thereafter, a value obtained by subtracting and correcting the FWHM value derived from the device in the corresponding $2\theta$ obtained from the above function may be used as $\beta$.

In some embodiments, an average particle diameter (D50) of the lithium-transition metal composite oxide particles 50 may be less than 3.0 $\mu$m. Within this case, the lithium-transition metal composite oxide particles 50 of the single particle shape may be effectively formed by sufficient input of the first and second melting agents.

In some embodiments, the average particle diameter (D50) of the lithium-transition metal composite oxide particles 50 may be in a range from 2.0 $\mu$m to 2.9 $\mu$m. Within this range, while forming the lithium-transition metal composite oxide particle having the single particle shape, deterioration of life-span properties due to cracks in the cathode active material may be effectively prevented during a pressing process of an electrode.

The terms "average particle size" or "D50" used herein may refer to a particle size when a volumetric cumulative percentage in a particle size distribution obtained from a particle volume corresponds to 50%.

For example, the average particle diameter may be measured through a particle size analyzer (PSA).

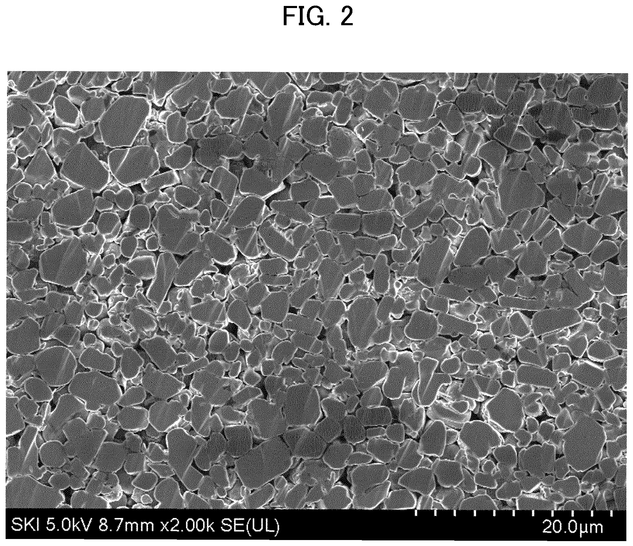

FIG. 2 is an SEM (Scanning Electron Microscopy) image for measuring a particle size of a lithium-transition metal composite oxide particle in accordance with exemplary embodiments.

Referring to FIG. 2, a cross-sectional image may be obtained by an ion milling of the cathode active material including the lithium-transition metal composite oxide particle 50, and an average size of 50 single particles is measured to determine the average particle diameter.

In some embodiments, the Sr-Zr-O compound of the first coating layer 60 may be doped or coated with an additional metal. For example, the additional metal may be at least one of Mg, Ca, Al, Ti, W, Ta and Nb.

The additional metal may be doped in in the perovskite structure of the above-described Sr-Zr-O compound to further enhance the electrical conductivity and improve the power and capacity properties of the cathode active material. Accordingly, even though the cathode active material having the high-Ni composition is fabricated as the single particle shape, improved power property of the secondary battery may be achieved.

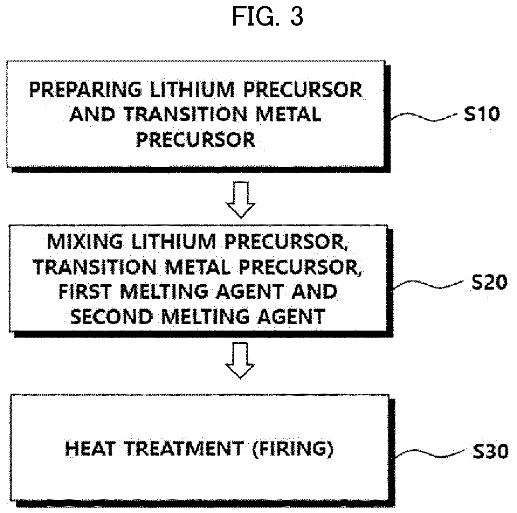

FIG. 3 is a process flow diagram illustrating a method of preparing a cathode active material in accordance with exemplary embodiments.

Referring to FIG. 3, a lithium precursor and a transition metal precursor may be prepared (e.g., in an operation of S10).

The lithium precursor may include, e.g., lithium carbonate, lithium nitrate, lithium acetate, lithium oxide, lithium hydroxide, or the like. These may be used alone or in a combination of two or more therefrom.

For example, the transition metal precursor may be prepared through a co-precipitation reaction of metal salts. The metal salts may include a nickel salt, a manganese salt and a cobalt salt.

Examples of the nickel salt include nickel sulfate, nickel hydroxide, nickel nitrate, nickel acetate and a hydrate thereof. Examples of the manganese salt include manganese sulfate, manganese acetate and a hydrate thereof. Examples of the cobalt salt include cobalt sulfate, cobalt nitrate, cobalt carbonate and a hydrate thereof.

The metal salts may be mixed with a precipitating agent and/or a chelating agent with a ratio satisfying the content or concentration ratio of each metal described with reference to Chemical Formula 1 to prepare an aqueous solution. A transition metal precursor may be prepared by co-precipitating the aqueous solution in a reactor.

The precipitating agent may include an alkaline compound such as sodium hydroxide (NaOH), sodium carbonate ($Na_2CO_3$), etc. The chelating agent may include, e.g., aqueous ammonia (e.g., $NH_4OH$), ammonium carbonate (e.g., $NH_3HCO_3$), etc.

A temperature of the co-precipitation reaction may be adjusted in, e.g., a range from about 40°C to 60°C. A reaction time may be adjusted in a range of about 24 hours to 72 hours.

In exemplary embodiments, the prepared lithium precursor, the transition metal precursor, the above-described first melting agent and the second melting agent may be mixed (e.g., in an operation of S20).

For example, the first melting agent may include $Sr(OH)_2$ or a hydrate of $Sr(OH)_2$, and the second melting agent may include $Zr(OH)_2$ or a hydrate of $Zr(OH)_2$. For example, the hydrate of $Sr(OH)_2$ may be $Sr(OH)_2 \cdot 8H_2O$. The first coating layer 60 including the Sr-Zr-O compound may be formed on the surface of the lithium-transition metal composite oxide particle 50 in a firing process to be described later by using the first melting agent.

In some embodiments, the first melting agent (e.g., $Sr(OH)_2$ or the hydrate of $Sr(OH)_2$) may be pulverized before the addition of the first and second melting agents. In this case, a particle size may be sufficiently reduced to improve reactivity with the lithium precursor and the transition metal precursor. Accordingly, the formation of the lithium-transition metal composite oxide particles 50 of the single particle shape and the first coating layer 60 may be facilitated.

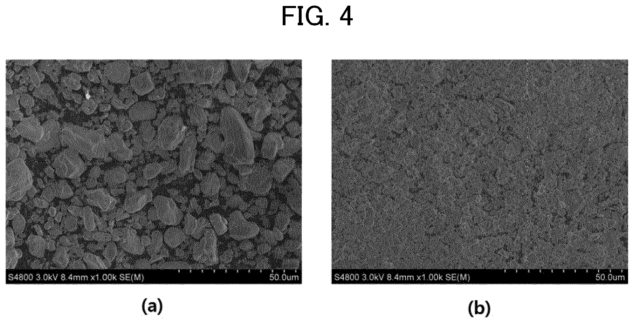

FIG.4 is an SEM image for describing a pulverization process of a melting agent in accordance with exemplary embodiments.

Referring to FIG. 4, a first melting agent powder may be pulverized to have an average particle diameter of 1 $\mu$m or less (e.g., from a state (a) to a state (b)). In this case, the formation of the lithium-transition metal composite oxide particle 50 having the uniform single particle shape may be facilitated. Accordingly, deterioration of the capacity and life-span properties of the secondary battery due to a formation of non-uniform single particle shape may be prevented.

The pulverization may be performed using, e.g., a jet mill.

In some embodiments, $Sr(OH)_2$ or the hydrate of $Sr(OH)_2$ (e.g., $Sr(OH)_2 \cdot 8H_2O$) may be used as the first melting agent, and a strontium content included in the first melting agent may be from 300 ppm to 2,000 ppm based on a total weight of the lithium-transition metal composite oxide particle 50. Preferably, the strontium content in the first melting agent may be from 500 ppm to 1,000 ppm based on the total weight of the lithium-transition metal composite oxide particle 50.

Within the range of the strontium content, the first melting agent may be sufficiently introduced to form the single particle while preventing a formation of non-uniform macro particles. Accordingly, both the power and life-span properties of the secondary battery may be improved.

In some embodiments, $Zr(OH)_2$ or the hydrate of $Zr(OH)_2$ may be used as the second melting agent, and a zirconium content included in the second melting agent may be from 300 ppm to 2,000 ppm based on the total weight of the lithium-transition metal composite oxide particle 50. Preferably, the zirconium content included in the second melting agent may be from 500 ppm to 1,000 ppm based on the total weight of the lithium-transition metal composite oxide particle 50.

Within the range of the zirconium content, the second melting agent may be sufficiently introduced together with the first melting agent to form the single particle while forming the first coating layer including the Sr-Z-O compound.

The lithium precursor, the transition metal precursor, the first melting agent and the second melting agent mixed with each other may be fired to form the lithium-transition metal composite oxide particle 50 having the first coating layer 60 that may be formed on the surface thereof and may include Sr-Z-O compound (e.g., in an operation of S30).

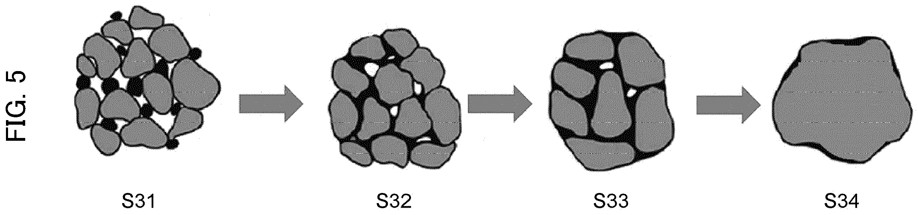

FIG.5 is a schematic flowchart for describing a formation of a cathode active material in accordance with exemplary embodiments.

In FIG. 5, the melting agents are indicated as relatively small dots between masses of the lithium precursor and the transition metal precursor.

Referring to FIG. 5, in, e.g., an operation of step S31, the lithium precursor, the transition metal precursor and the melting agent may be prepared in a mixed powder state through the above-described mixing process (e.g., in the operation of step S20).

For example, when the lithium precursor and the transition metal precursor are mixed and fired without adding the melting agent, each particle may be grown to form a secondary particle instead of the single particle. In this case, gas may be generated due to particle cracks caused by repeated charging and discharging. Accordingly, the capacity retention of the secondary battery may be reduced.

As illustrated in FIG. 5, if the above-described melting agents (the first melting agent and the second melting agent) are added and mixed, the melting agents and the lithium precursor may react to form an intermediate in a liquid state. In this case, as the intermediate reacts with the transition metal precursor, a rearrangement phenomenon may occur to reduce a surface tension (e.g., in an operation of S32).

For example, after the rearrangement, a solution re-precipitation phenomenon may occur, so that pores at an inside of the lithium-transition metal composite oxide particle may be reduced (e.g., in an operation of S33).

For example, the re-precipitated lithium-transition metal composite oxide particle may be formed to have the single particle shape through a densification (e.g., in an operation of S34). In this case, particle cracks and gas generation during repeated charging and discharging of the secondary battery may be reduced, so that the life-span properties of the battery may be improved.

In some embodiments, after performing the above-described firing (e.g., in the operation of S30), boron may be added on the first coating layer 60 and a heat treatment may be performed. In this case, the second coating layer 70 including the Li-B-O compound may be formed on the first coating layer 60. Thus, a surface ionic conductivity of the cathode active material may be increased, thereby improving the power properties of the secondary battery. For example, the heat treatment may be performed at a temperature from 200 °C to 400 °C.

For example, the first melting agent may contain a metal cation having an ionic radius greater than that of nickel, cobalt and manganese. For example, the ionic radius of $Sr^{2+}$ contained in $Sr(OH)_2$ or the hydrate of $Sr(OH)_2$ is 132 pm, the ionic radius of $Ni^{2+}$ is 83 pm, the ionic radius of $Co^{3+}$ is 68.5 pm, and the ionic radius of $Mn^{4+}$ is 67 pm. Sr may not be included in a layered structure due to the relatively large ionic radius to form the Sr-Zr-O compound together with Zr derived from the second melting agent on the surface of the lithium-transition metal composite oxide particle. Accordingly, the above-described improvement of the life-span properties may be implemented.

In some embodiments, a metal hydroxide may be further added while mixing the above-described first and second melting agents. For example, a metal hydroxide may be added together with $Sr(OH)_2$ or the hydrate of $Sr(OH)2$ and $Zr(OH)_2$ or the hydrate of $Zr(OH)_2$ into a mixture of the lithium precursor and the transition metal precursor. In this case, the Sr-Zr-O compound included in the first coating layer 60 may be doped or coated with a metal contained in the metal hydroxide to further improve the electrical conductivity of the cathode active material.

For example, the metal may be at least one of Mg, Ca, Al, Ti, W, Ta and Nb.

In some embodiments, the temperature of the above-described firing (e.g., in the operation of S30) may satisfy Equations 2 and 3 below.

$$[\text{Equation 2}]$$

$$t1\text{-}15 \le T1(°C) \le t1\text{+}15$$

In Equation 2, t1 may be a temperature according to Equation 3 below, and T1 may be a temperature at which the firing is performed.

$$[\text{Equation 3}]$$

$$t1(°C) = (\text{-}520)*x + 1285$$

In Equation 3, x may be the same as x included in the above-described Chemical Formula 1.

Within the above temperature range, the lithium-transition metal composite oxide particles 50 having the single particle shape and having a proper average particle size and a crystallite size may be more effectively formed.

In some embodiments, a metal oxide coating layer may be further formed on the lithium-transition metal composite oxide particle formed according to the operations of S10 to S30 as described above.

For example, the lithium-transition metal composite oxide particles and a metal oxide may be mixed and heat-treated to form the metal oxide coating layer on the lithium-transition metal composite oxide particle. In this case, cracks on the particle surface which may be caused by a collision between particles in the jet mill process may be removed. Accordingly, the life-span properties of the secondary battery may be further improved.

For example, the metal oxide may include an oxide of at least one of Al, Mg, Ca, Al, Ti, W, Ta and Nb. For example, the metal oxide may include $Al_2O_3$.

In some embodiments, the lithium-transition metal composite oxide particle on which the above-described metal oxide coating layer may be washed.

For example, the lithium-transition metal composite oxide particles on which the metal oxide coating layer is formed and water may be mixed with each other in a volume ratio of 1:1, stirred, and dried. Accordingly, a residual lithium remaining on the surface of the lithium-transition metal composite oxide particles may be removed, thereby improving the power and life-span properties of the secondary battery.

In some embodiments, a boron-containing coating layer may be further formed on the washed and dried lithium-transition metal composite oxide particle.

For example, the washed and dried lithium-transition metal composite oxide particles may be mixed with boric acid ($H_3BO_3$), and then heat-treated to further form the boron-containing coating layer on the lithium-transition metal composite oxide particles. Accordingly, the ionic conductivity of the cathode active material may be improved, thereby further improving the power properties of the secondary battery.

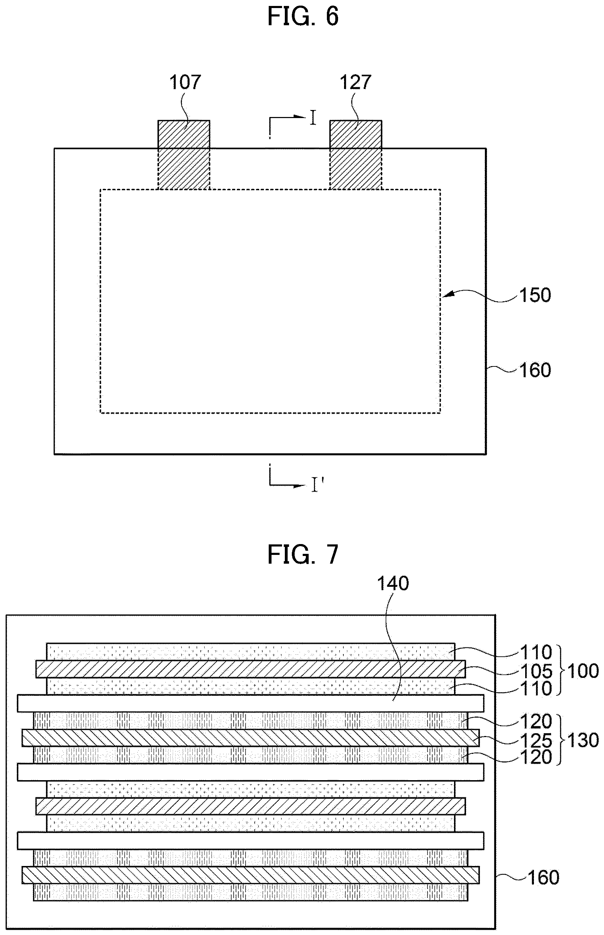

FIGS. 6 and 7 are a schematic plan view and a cross-sectional view, respectively, of a lithium secondary battery in accordance with exemplary embodiments.

Referring to FIGS. 6 and 7, a lithium secondary battery may include a cathode 130, an anode 140 and a separation layer 140.

The cathode 130 may include a cathode current collector 105 and a cathode active material layer 110 formed by coating a cathode active material including the above-described lithium-transition metal composite oxide particle 50 on the cathode current collector 105.

For example, the lithium-transition metal composite oxide particle 50 on which the first coating layer 60 including the Sr-Zr-O compound is formed may be mixed in a solvent with a binder, a conductive material and/or a dispersive agent to form a slurry. The slurry may be coated on the cathode current collector 105, and then dried and pressed to form the cathode.

The cathode current collector 105 may include stainless-steel, nickel, aluminum, titanium, copper or an alloy thereof. Preferably, aluminum or an alloy thereof may be used.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material may be relatively increased. Thus, capacity and power of the lithium secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as $LaSrCoO_3$ or $LaSrMnO_3$, etc.

The anode 130 may include an anode current collector 125 and an anode active material layer 120 formed by coating an anode active material on a surface of the anode current collector 125.

The anode active material may include a material commonly used in the related art which may be capable of adsorbing and ejecting lithium ions. For example, a carbon-based material such as a crystalline carbon, an amorphous carbon, a carbon complex or a carbon fiber, a lithium alloy, silicon (Si)-based compound, tin, etc., may be used.

The amorphous carbon may include a hard carbon, cokes, a mesocarbon microbead (MCMB) fired at a temperature of 1500 °C or less, a mesophase pitch-based carbon fiber (MPCF), etc. The crystalline carbon may include a graphite-based material such as natural graphite, graphitized cokes, graphitized MCMB, graphitized MPCF, etc. The lithium alloy may further include aluminum, zinc, bismuth, cadmium, antimony, silicon, lead, tin, gallium, indium, etc.

The anode current collector 125 may include, e.g., gold, stainless steel, nickel, aluminum, titanium, copper or an alloy thereof, preferably may include copper or a copper alloy.

In some embodiments, a slurry may be prepared by mixing and stirring the anode active material with a binder, a conductive material and/or a dispersive agent in a solvent. The slurry may be coated on the anode current collector, and then dried and pressed to form the anode 130.

The binder and the conductive material substantially the same as or similar to those mentioned above may be used in the anode 130. In some embodiments, the binder for forming the anode 130 may include an aqueous binder such as styrene-butadiene rubber (SBR), and carboxymethyl cellulose (CMC) may also be used as a thickener.

The separation layer 140 may be interposed between the cathode 100 and the anode 130. The separation layer 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 140 may also include a non-woven fabric formed from a glass fiber with a high melting point, a polyethylene terephthalate fiber, or the like.

In exemplary embodiments, an electrode cell may be defined by the cathode 100, the anode 130 and the separation layer 140, and a plurality of the electrode cells may be stacked to form the electrode assembly 150 that may have e.g., a jelly roll shape. For example, the electrode assembly 150 may be formed by winding, laminating or folding the separation layer 140.

The electrode assembly 150 may be accommodated together with an electrolyte in an outer case 160 to define the lithium secondary battery. In exemplary embodiments, a non-aqueous electrolyte may be used as the electrolyte.

The non-aqueous electrolyte may include a lithium salt and an organic solvent. The lithium salt may be represented by $Li^+X^-$, and an anion of the lithium salt $X^-$ may include, e.g., $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination of two or more therefrom.

As illustrated in FIG. 6, electrode tabs (a cathode tab and an anode tab) may protrude from the cathode current collector 105 and the anode current collector 125 included in each electrode cell to one side of the outer case 160. The electrode tabs may be welded together with the one side of the case 160 to be connected to an electrode lead (a cathode lead 107 and an anode lead 127) that may be extended or exposed to an outside of the outer case 160.

The lithium secondary battery may be manufactured in, e.g., a cylindrical shape using a can, a square shape, a pouch shape or a coin shape.

Hereinafter, preferred embodiments are proposed to more concretely describe the present invention. However, the following examples are only given for illustrating the present invention and those skilled in the related art will obviously understand that various alterations and modifications are possible within the scope and spirit of the present invention. Such alterations and modifications are duly included in the appended claims.

Example 1

(1) Preparation of lithium precursor and transition metal precursor (S10)

$NiSO_4$, $CoSO_4$ and $MnSO_4$ were mixed in a molar ratio of 0.94:0.05:0.01, respectively using distilled water from which dissolved oxygen was removed by bubbling with $N_2$ for 24 hours. The solution was put into a reactor at 50 °C, and NaOH and $NH_4OH$ were used as a precipitating agent and a chelating agent, respectively, to proceed with a co-precipitation reaction for 48 hours to obtain $Ni_{0.94}Co_{0.05}Mn_{0.01}(OH)_2$ as a transition metal precursor. The obtained precursor was dried at 80 °C for 12 hours and then re-dried at 110 °C for 12 hours.

In the above composition (e.g., 94% Ni), an appropriate firing temperature range according to the above-described Equations 2 and 3 is from 781.2 °C to 811.2 °C.

(2) Mixing (S20)

Lithium hydroxide, the transition metal precursor, $Sr(OH)_2 \cdot 8H_2O$ as a first melting agent and $Zr(OH)_2$ as a second melting agent were mixed in a dry high-speed mixer. $Sr(OH)_2$ was put such that a strontium content became 1,000 ppm based on a total weight of the lithium-transition metal composite oxide particles to be obtained, and $Zr(OH)_2$ was put such that a zirconium content of 1,000 ppm based on the total weight of the lithium-transition metal composite oxide particles to be obtained.

(3) Firing (S30)

Lithium hydroxide, the transition metal precursor, $Sr(OH)_2 \cdot 8H2O$ and $Zr(OH)_2$ mixed as described above were put into a kiln, and a temperature was raised to about 795°C at a temperature increasing rate of 2°C/min while supplying oxygen at a flow rate of 100 mL/min to maintain an oxygen concentration in the kiln as 95% or more. The raised temperature was maintained for 10 hours. After the firing, a fine pulverization was performed using a jet mill to obtain the lithium-transition metal composite oxide particles.

(4) Formation of a metal oxide coating layer

$Al_2O_3$ having an average particle diameter from 30 nm to 70 nm was added to the obtained lithium-transition metal composite oxide particles in a dry high-speed mixer and uniformly mixed for 5 minutes to prepare a mixture. The added amount of $Al_2O_3$ was 1,000 ppm based on the total weight of the lithium-transition metal composite oxide particles.

The mixture was placed in a kiln, heated to 700°C at a rate of 2°C/min, and then maintained at 700°C for 10 hours. An oxygen gas was passed continuously at a flow rate of 10 mL/min while raising and maintaining the temperature.

After the firing, natural cooling was performed to room temperature, followed by pulverization and classification to obtain lithium-transition metal composite oxide particles coated with a metal oxide. Through the above-described coating and heat treatment, cracks on a particle surface caused by a collision between the particles during the jet milling process were removed.

(5) Washing, drying and formation of a boron-containing coating layer

The metal oxide-coated lithium-transition metal composite oxide particles were mixed with water in a volume ratio of 1:1, stirred for 10 minutes, and then filtered and washed with water. The filtered lithium-transition metal composite oxide particles were dried at 130 °C for 12 hours.

The washed and dried lithium-transition metal composite oxide particles and 1,000 ppm of $H_3BO_3$ based on a total weight of the particles were put into a dry high-speed mixer, and the mixture was uniformly mixed for 5 minutes to prepare a mixture. Specifically, the dried lithium-transition metal composite oxide particles and 1,000 ppm of $H_3BO_3$ based on the total weight of the particles were put into a kiln in an oxygen atmosphere, and the temperature was raised to 300°C at a rate of 2°C/min while performing a dry mixing. After the temperature was raised, the temperature was maintained for 10 hours to prepare lithium-transition metal composite oxide particles having a boron-containing coating layer formed thereon.

(6) Fabrication of lithium secondary batter

A secondary battery was manufactured using the above-described cathode active material. Specifically, a cathode mixture was prepared by mixing the cathode active material, Denka Black as a conductive material, and PVDF as a binder in a mass ratio of 93:5:2, respectively. The mixture was coated on an aluminum current collector, dried and pressed to prepare the cathode. A target electrode density of the cathode after the pressing was adjusted to 3.6 g/cc ~ 3.7 g/cc.

A lithium metal was used as an anode active material.

The cathode and the anode prepared as described above were stacked by notching in a circular shape having a diameter of $\Phi14$ and $\Phi16$, respectively, and a separator (polyethylene, thickness: 13$\mu$m) notched with $\Phi19$ was interposed between the cathode and the anode to form an electrode cell. The electrode cell was put in a coin cell exterior material having a diameter of 20 mm and a height of 1.6 mm, and an electrolyte was injected to form an assembly. The electrode cell was aged for 12 hours or more so that the electrolyte could be impregnated at an inside of the electrode cell.

As the electrolyte, 1M $LiPF_6$ solution in a mixed solvent of EC/EMC (30/70; volume ratio) was used.

The secondary battery prepared as described above was subjected to a formation charging and discharging (charge condition CC-CV 0.1C 4.3V 0.005C CUT-OFF, discharge condition CC 0.1C 3V CUT-OFF).

Example 2

A cathode active material and a lithium secondary battery were prepared by the same method as that in Example 1, except that a temperature was raised to 782 °C in the firing.

Example 3

A cathode active material and a lithium secondary battery were prepared by the same method as that in Example 1, except that a temperature was raised to 810 °C in the firing.

Example 4

A cathode active material and a lithium secondary battery were prepared by the same method as that in Example 1, except that $Mg(OH)_2$ was also added such that a magnesium content became 200ppm based on the total weight of the lithium-transition metal composite oxide particles to be obtained when adding $Sr(OH)_2 \cdot 8H_2O$ and $Zr(OH)_2$.

Example 5

A cathode active material and a lithium secondary battery were obtained by the same method as that in Example 1, except that a temperature was raised to 775 °C in the firing.

Example 6

A cathode active material and a lithium secondary battery were prepared by the same method as that in Example 1, except that a temperature was raised to 830 °C in the firing.

Example 7

A cathode active material and a lithium secondary battery were prepared by the same method as that in Example 1, except that $Sr(OH)_2 \cdot 8H_2O$ was added so that the strontium content became 250 ppm based on the total weight of the lithium-transition metal composite oxide particles to be obtained.

Example 8

A cathode active material and a lithium secondary battery were prepared by the same method as that in Example 1, except that $Sr(OH)_2 \cdot 8H_2O$ was added so that the strontium content became 2,050 ppm based on the total weight of the lithium-transition metal composite oxide particles to be obtained.

Example 9

A cathode active material and a lithium secondary battery were prepared by the same method as that in Example 1, except that $NiSO_4$, $CoSO_4$ and $MnSO_4$ were mixed in a ratio of 0.88:0.09:0.03, respectively, to obtain $Ni_{0.88}Co_{0.09}Mn_{0.03}(OH)_2$ as a transition metal precursor, and a temperature was raised to 830 °C in the firing.
In the above composition (e.g., Ni 88%), an appropriate firing temperature range according to Equations 2 and 3 is 812.4 °C to 842.4 °C.

Example 10

A cathode active material and a lithium secondary battery were prepared by the same method as that in Example 9, except that $Mg(OH)_2$ was also added such that a magnesium content became 200ppm based on the total weight of the lithium-transition metal composite oxide particles to be obtained when adding $Sr(OH)_2 \cdot 8H_2O$ and $Zr(OH)_2$.

Comparative Example 1

A cathode active material and a lithium secondary battery were prepared by the same method as that in Example 1, except that the first and second melting agents were not added, and a temperature was raised to 845 °C in the firing.

Comparative Example 2

A cathode active material and a lithium secondary battery were prepared by the same method as that in Comparative Example 1, except that a temperature was raised to 795 °C in the firing.

Comparative Example 3

A cathode active material and a lithium secondary battery were prepared by the same method as that in Comparative Example 1, except that $NiSO_4$, $CoSO_4$ and $MnSO_4$ were mixed in a ratio of 0.88:0.09:0.03, respectively, to obtain $Ni_{0.88}Co_{0.09}Mn_{0.03}(OH)_2$ as a transition metal precursor, and a temperature was raised to 830 °C in the firing.
For the cathode active materials prepared according to the above-described Examples and Comparative Examples, crystal grain sizes were calculated using an XRD analysis and Equation 1 as described above.
Specific XRD analysis equipment and conditions are shown in Table 1 below.

[Table 1]

| XRD(X-Ray Diffractometer) EMPYREAN | |
|---|---|
| Maker | PANalytical |
| Anode material | Cu |

(continued)

| XRD(X-Ray Diffractometer) EMPYREAN | |
|---|---|
| K-Alphal wavelength | 1.540598 □ |
| Generator voltage | 45 kV |
| Tube current | 40 mA |
| Scan Range | 10~120° |
| Scan Step Size | 0.0065° |
| Divergence slit | 1/4° |
| Antiscatter slit | 1/2° |

Further, Ni molar ratios among transition metals, input of melting agent/Mg doping, firing temperatures and strontium input amounts are shown in Table 2 below.

[Table 2]

| No. | Ni ratio (%) | Input of Melting Agent | Mg Doping | Firing Temperature (°C) | Sr amount (ppm) | Crystallite Size (nm) | D50 (μm) |
|---|---|---|---|---|---|---|---|
| Example 1 | 94 | O | X | 795 | 1,000 | 380 | 2.57 |
| Example 2 | 94 | O | X | 782 | 1,000 | 369 | 2.73 |
| Example 3 | 94 | O | X | 810 | 1,000 | 468 | 2.64 |
| Example 4 | 94 | O | O | 795 | 1,000 | 385 | 2.60 |
| Example 5 | 94 | O | X | 775 | 1,000 | 315 | 3.11 |
| Example 6 | 94 | O | X | 830 | 1,000 | 567 | 3.05 |
| Example 7 | 94 | O | X | 795 | 250 | 322 | 3.12 |
| Example 8 | 94 | O | X | 795 | 2,050 | 552 | 3.24 |
| Example 9 | 88 | O | X | 830 | 1,000 | 442 | 2.61 |
| Example 10 | 88 | O | O | 830 | 1,000 | 454 | 2.45 |
| Comparative Example 1 | 94 | X | X | 845 | - | 738 | 3.8 |
| Comparative Example 2 | 94 | X | X | 795 | - | 200 | 3.5 |
| Comparative Example 3 | 88 | X | X | 830 | - | 330 | 2.95 |

Referring to Table 2, in Examples 1 to 4 where the firing temperatures satisfied Equations 2 and 3 and the strontium input amounts were from 300 ppm to 2,000 ppm, the crystal grain sizes were from 300 nm to 500 nm and the average particle diameters (D50) were 3.0 μm or less. was measured.

In Example 5 where the firing temperature was less than the temperature range according to Equations 2 and 3, a degree of the densification (S34) was relatively small due to the relatively low temperature and the crystallite size was relatively small compared to those of Examples 1 to 4.

In Example 6 where the firing temperature exceeded the temperature range according to Equations 2 and 3, the crystallite n size and average particle size were relatively higher than those of Examples 1 to 4 due to a particle agglomeration by an excessive firing.

In Example 7 where the amount of strontium input was less than 300 ppm, the melting agent did not sufficiently react with the lithium precursor, and a single particle formation was relatively insufficient. Accordingly, a relatively small crystallite size was obtained compared to those from Examples 1 to 4.

In Example 8 where the amount of strontium input exceeded 2,000 ppm, the melting agent reacted non-uniformly with the transition metal precursors, and relatively large crystallite size and average particle size were achieved compared to those from Examples 1 to 4.

In Comparative Examples 1 to 3 where the melting agent was not added, the substantial single particle shape was not formed to cause excessively high or low crystallite sizes and particle sizes.

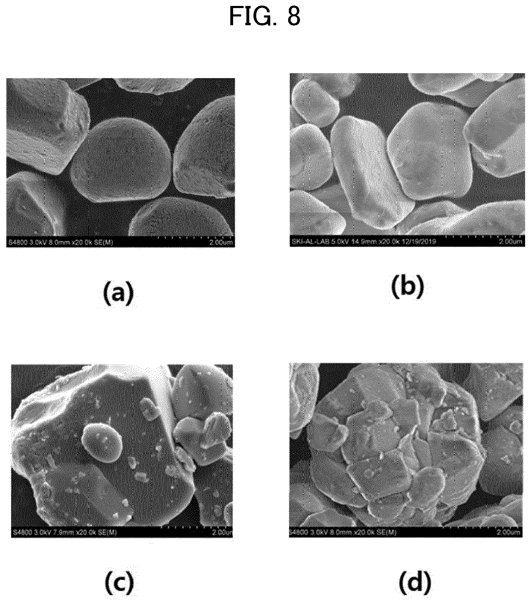

FIG. 8 are SEM images of surfaces of cathode active materials according to Example 1, Example 9, Comparative Example 1 and Comparative Example 2. Specifically, (a), (b), (c) and (d) of FIG. 8 are SEM images of the surfaces of the cathode active materials of Example 1, Example 9, Comparative Example 1 and Comparative Example 2, respectively.

Referring to FIG. 8 , in Examples 1 and 9 where the melting agent was added, a cathode active material having a single particle shape was formed. However, in Comparative Examples 1 and 2 where the melting agent was not added, the cathode active material of a secondary particle shape having a polycrystalline structure was formed.

Experimental Example

(1) Measurement of cation mixing ratio

A cation mixing may refer to, e.g., a phenomenon that Ni ions are located in a Li layer in a layered structure of the lithium-transition metal composite oxide particle. If a cation mixing ratio is high, a discharge capacity may be decreased.

The cation mixing ratio of the cathode active materials according to the above-described Examples and Comparative Examples were measured by a Rietveld Method.

Specifically, a XRD peak was measured, and the lattice constant was refined through a least square method or a Rawlay method. Thereafter, an XRD simulation was performed on a structural model constructed by estimating an arrangement of each atom based on a crystallographic aspect and a chemical composition. A ratio of Ni ions occupying a Li site (site 3a) of the cathode active material was calculated through the above simulation.

(2) Evaluation on initial charge/discharge capacity and initial capacity efficiency evaluation

After charging (CC-CV 0.1 C 4.3V 0.005C CUT-OFF) the lithium secondary batteries prepared according to Examples and Comparative Examples in a chamber at 25 °C, a capacity (initial charge capacity) of each battery was measured. Thereafter, the battery weas discharged (CC 0.1C 3.0V CUT-OFF), and a capacity (initial discharge capacity) was measured.

An initial capacity efficiency was evaluated as a percentage (%) by dividing the measured initial discharge capacity with the measured initial charge capacity.

(3) Evaluation on of capacity retention (life-span property) during repeated charging and discharging

Charging (CC/CV 0.5C 4.3V 0.05C CUT-OFF) and discharging (CC 1.0C 3.0V CUT-OFF) were repeated with 50 cycles for lithium secondary batteries according to Examples and Comparative Examples. A capacity retention was evaluated as a percentage by dividing a discharge capacity at the 50th cycle with the discharge capacity at the 1st cycle.

The evaluation results are shown in Table 3 below.

[Table 3]

| No. | Cation Mixing Ratio (%) | Initial Charge Capacity (mAh/g) | Initial Discharge Capacity (mAh/g) | Initial Charge Efficiency (%) | Capacity Retention (%) |
|---|---|---|---|---|---|
| Example 1 | 1.55 | 248.1 | 216.3 | 87.2 | 92.8 |
| Example 2 | 1.60 | 248.3 | 217.4 | 87.6 | 93.2 |
| Example 3 | 1.53 | 247.9 | 216.9 | 87.5 | 93.0 |
| Example 4 | 1.58 | 247.0 | 215.1 | 87.1 | 93.9 |
| Example 5 | 1.51 | 247.8 | 216.1 | 87.2 | 90.5 |
| Example 6 | 2.4 | 247.0 | 213.6 | 86.5 | 89.1 |
| Example 7 | 1.58 | 246.8 | 212.9 | 86.3 | 89.3 |
| Example 8 | 1.52 | 247.5 | 212.2 | 85.4 | 90.2 |

(continued)

| No. | Cation Mixing Ratio (%) | Initial Charge Capacity (mAh/g) | Initial Discharge Capacity (mAh/g) | Initial Charge Efficiency (%) | Capacity Retention (%) |
|---|---|---|---|---|---|
| Example 9 | 1.27 | 240.4 | 212.5 | 88.4 | 92.4 |
| Example 10 | 1.25 | 240.0 | 212.2 | 88.4 | 94.1 |
| Comparative Example 1 | 5.1 | 244.4 | 205.8 | 84.2 | 85.4 |
| Comparative Example 2 | 3.5 | 245.0 | 209.3 | 85.4 | 88.2 |
| Comparative Example 3 | 3.4 | 235.3 | 207.8 | 88.3 | 86.8 |

Referring to Table 3, in Examples where the single particle and the first coating layer were formed by introducing the melting agent, the reduced cation mixing ratios, improved life-span properties and increased initial capacity efficiencies were generally provided when compared to those from Comparative Examples.

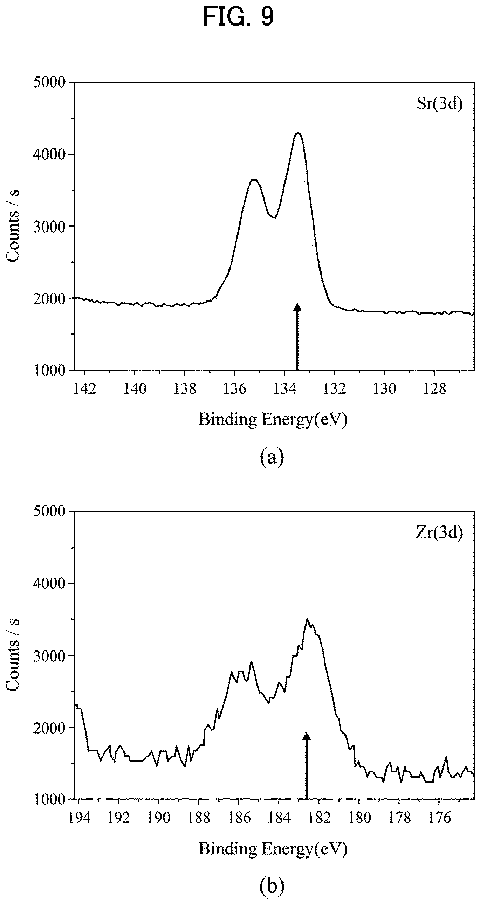

FIG. 9 is a graph obtained by measuring element signals on a surface of a cathode active material of Example 1 through an XPS (X-ray Photoelectron Spectroscopy) analysis. Specifically, FIG. 9 is a graph of measuring Sr and Zr components of the Sr-Zr-O compound present on the surface of the lithium-transition metal composite oxide particle of Example 1.

The XPS analysis was performed under the following conditions.

1) X-ray type: Source - Al Ka, Beam size 50 um
2) Analyzer: CAE Mode
3) Number of scans: 2 (survey scan), 10-50 (Narrow Scan)
4) Pass energy: 150eV (survey scan), 20eV (Narrow Scan)

Referring to FIG. 9, in Example 1, the Sr-Zr-O compound was formed on the surface of the lithium-transition metal composite oxide particle by adding the first and second melting agents. Thus, a Sr peak at 133.6 eV was clearly observed and a Zr peak at 182.8 eV was clearly observed in the XPS analysis.

In Example 5 where the firing temperature was less than the temperature range according to Equations 2 and 3, a degree of the rearrangement and solution reprecipitation was relatively small, and the capacity retention was relatively degraded compared to those from Examples 1 to 4.

In Example 6 where the firing temperature exceeded the temperature range according to Equations 2 and 3, the capacity retention was relatively degraded compared to those from Examples 1 to 4 by the particle agglomeration due to the excessive firing.

In Example 7 where the strontium input amount was less than 300 ppm, the melting agent did not sufficiently react with the lithium precursor, and the single particle formation was relatively insufficient. Accordingly, relatively low capacity and output properties were provided compared to those from Examples 1 to 4.

In Example 8 where the strontium input amount was more than 2,000 ppm, the melting agent reacted non-uniformly with a large amount of the transition metal precursors, and the relatively low-capacity efficiency was provided measured compared to those from Examples 1 to 4.

In Comparative Example 1 where the firing temperature was beyond the temperature range according to Equations 2 and 3 and the melting agent was not used, the single particles were formed due to the high-temperature firing, but the average particle diameter was excessively increased to result in degraded capacity properties compared to those from Examples.

In Comparative Examples 2 and 3 where the firing temperature was within the temperature range according to Equations 2 and 3, but the melting agent was not used, the single particle was not substantially formed, resulting in degraded capacity retention during the repeated charging and discharging. Further, lower capacity properties were confirmed compared to those of Examples of the same Ni composition.

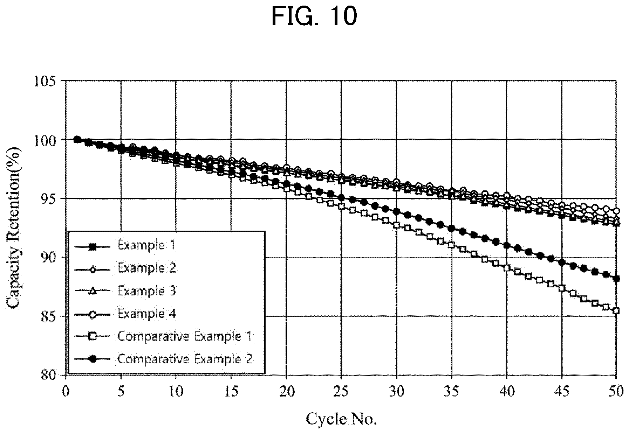

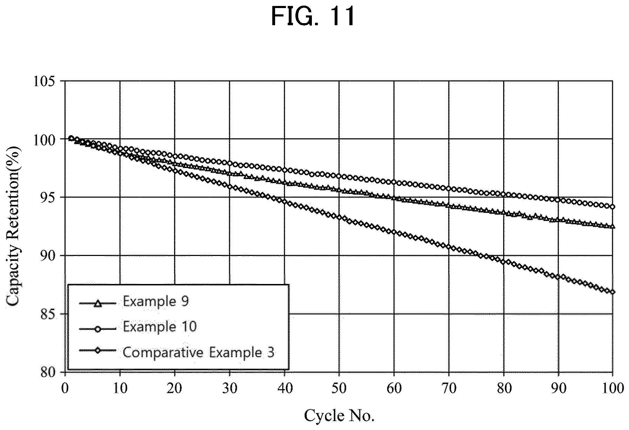

FIGS. 10 and 11 are graphs showing capacity changes while repeating charge and discharge of secondary batteries according to Examples and Comparative Examples. Specifically, FIG. 10 is a graph showing the capacity retention of Examples 1 to 4 and Comparative Examples 1 and 2 for the cathode active material having a composition of Ni 94%. FIG. 11 is a graph showing the capacity retention of Examples 9, 10 and Comparative Example 3 for the cathode active material having a composition of Ni 88%.

Referring to FIGS. 10 and 11 , in Examples where the single particle and the first coating layer were formed by introducing the melting agent, enhanced capacity retentions were achieved compared to those from Comparative Examples where the melting agent was not added.

**Claims**

1. A cathode active material for a lithium secondary battery, comprising:

   a lithium-transition metal composite oxide particle having a single particle shape; and
   a first coating layer formed on a surface of the lithium-transition metal composite oxide particle, the first coating layer comprising a Sr-Zr-O compound.

2. The cathode active material for a lithium secondary battery of claim 1, further comprising a second coating layer formed on a surface of the first coating layer, the second coating layer comprising a Li-B-O compound.

3. The cathode active material for a lithium secondary battery of claim 1, wherein the Sr-Zr-O compound is derived from a first melting agent containing strontium and a second melting agent containing zirconium.

4. The cathode active material for a lithium secondary battery of claim 1, wherein a crystallite size of the lithium-transition metal composite oxide particle measured by an XRD analysis is in a range from 300 nm to 500 nm, and the crystallite size is calculated by Equation 1:

$$[\text{Equation 1}]$$

$$L = \frac{0.9\lambda}{\beta cos\theta}$$

wherein, in Equation 1, L is the crystallite size, $\lambda$ is an X-ray wavelength (nm), $\beta$ is a full width at half maximum of a (003) plane (rad), and $\theta$ is a diffraction angle (rad).

5. The cathode active material for a lithium secondary battery of claim 1, wherein an average particle diameter (D50) of the lithium-transition metal composite oxide particle is less than 3.0 $\mu$m.

6. The cathode active material for a lithium secondary battery of claim 1, wherein a Sr peak is observed at 133.6 eV and a Zr peak is observed at 182.8 eV when the surface of the lithium-transition metal composite oxide particle is measured by an X-ray photoelectron spectrometer (XPS) analysis.

7. The cathode active material for a lithium secondary battery of claim 1, wherein the Sr-Zr-O compound comprises a perovskite structure.

8. A method of preparing a cathode active material for a lithium secondary battery, comprising:

   preparing a lithium precursor and a transition metal precursor;
   mixing the lithium precursor, the transition metal precursor, a first melting agent and a second melting agent; and
   firing a mixture comprising the lithium precursor, the transition metal precursor, the first melting agent and the second melting agent to form a lithium-transition metal composite oxide particle comprising a first coating layer on a surface thereof, the first coating layer comprising a Sr-Zr-O compound.

9. The method of claim 8, wherein the first melting agent comprises $Sr(OH)_2$ or a hydrate of $Sr(OH)_2$, and the second melting agent comprises $Zr(OH)_2$ or a hydrate of $Zr(OH)_2$, and
   a strontium content included in the first melting agent is from 300 ppm to 2,000 ppm based on a total weight of the lithium-transition metal composite oxide particle.

10. The method of claim 9, wherein a zirconium content in the second melting agent is from 300 ppm to 2,000 ppm based on the total weight of the lithium-transition metal composite oxide particle.

11. The method of claim 8, further comprising adding boron and performing a heat treatment to form a second coating layer comprising a Li-B-O compound on a surface of the first coating layer.

12. The method of claim 8, wherein a metal hydroxide is further added in the mixing the lithium precursor, the transition metal precursor, the first melting agent and the second melting agent, and
the metal hydroxide is a hydroxide of at least ones of Mg, Ca, Al, Ti, W, Ta and Nb.

13. The method of claim 8, wherein the lithium-transition metal composite oxide particle is represented by Chemical Formula 1:

[Chemical Formula 1] $Li_aNi_xM_{1-x}O_{2+y}$

wherein, in Chemical Formula 1, $0.9 \leq a \leq 1.5$, $0.6 \leq x \leq 0.99$, $-0.1 \leq y \leq 0.1$, and M is at least one element selected from the group consisting of Na, Mg, Ca, Y, Ti, Zr, Hf, V, Nb, Ta, Cr, Mo, W, Mn, Co, Fe, Cu, Ag, Zn, B, Al, Ga, C, Si, Sn and Zr.

14. The method of claim 13, wherein a temperature at which the firing is performed is in a range represented by Equations 2 and 3:

$$[\text{Equation 2}]$$

$$t1-15 \leq T1(°C) \leq t1+15$$

wherein, in Equation 2, t1 is a temperature represented by Equation 3 below, and T1 is the temperature at which the firing is performed

$$[\text{Equation 3}]$$

$$t1(°C) = (-520)*x + 1285$$

wherein, in Equation 3, x is the same as x in Chemical Formula 1.

15. A lithium secondary battery comprising:
a cathode comprising a cathode active material layer that comprises the cathode active material for a lithium secondary battery of claim 1; and
an anode facing the cathode.

## FIG. 1A

## FIG. 1B

# FIG. 2

# FIG. 3

PREPARING LITHIUM PRECURSOR AND TRANSITION METAL PRECURSOR — S10

⬇

MIXING LITHIUM PRECURSOR, TRANSITION METAL PRECURSOR, FIRST MELTING AGENT AND SECOND MELTING AGENT — S20

⬇

HEAT TREATMENT (FIRING) — S30

# FIG. 4

(a)                    (b)

# FIG. 5

S31

S32

S33

S34

# FIG. 6

107    127

150

160

I

I'

# FIG. 7

140

110
105  } 100
110

120
125  } 130
120

160

# FIG. 8

(a)

(b)

(c)

(d)

# FIG. 9

(a)

(b)

# FIG. 10

# FIG. 11

Europäisches
Patentamt

European
Patent Office

Office européen
des brevets

## EUROPEAN SEARCH REPORT

Application Number

EP 22 16 3611

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/221497 A1 (LG CHEMICAL LTD [KR]) 21 November 2019 (2019-11-21) * paragraph [0079] - paragraph [0097] * | 1-15 | INV. C01G53/00 H01M4/04 H01M4/131 |
| X | CN 102 610 811 A (TIANJIN B & M SCIENCE & TECHNOLOGY JOINT STOCK CO LTD) 25 July 2012 (2012-07-25) * example 3 * | 1-15 | H01M4/36 H01M4/525 H01M4/62 H01M10/052 |
| A | KR 2019 0059249 A (LG CHEMICAL LTD [KR]) 30 May 2019 (2019-05-30) * example 1 * | 1-15 | |
| A | US 2020/212423 A1 (PARK YOUNG UK [KR] ET AL) 2 July 2020 (2020-07-02) * example 1 * | 1-15 | |

TECHNICAL FIELDS
SEARCHED (IPC)

C01G
H01M

The present search report has been drawn up for all claims

| Place of search | Date of completion of the search | Examiner |
|---|---|---|
| Munich | 9 August 2022 | Besana, Sonia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 3611

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2022

| Patent document cited in search report | Publication date | Patent family member(s) | Publication date |
|---|---|---|---|
| WO 2019221497 A1 | 21-11-2019 | CN 111819718 A | 23-10-2020 |
| | | EP 3751646 A1 | 16-12-2020 |
| | | JP 2021516424 A | 01-07-2021 |
| | | KR 20190131842 A | 27-11-2019 |
| | | US 2021135187 A1 | 06-05-2021 |
| | | WO 2019221497 A1 | 21-11-2019 |
| CN 102610811 A | 25-07-2012 | NONE | |
| KR 20190059249 A | 30-05-2019 | CN 110431695 A | 08-11-2019 |
| | | EP 3595060 A1 | 15-01-2020 |
| | | JP 7076877 B2 | 30-05-2022 |
| | | JP 2020515010 A | 21-05-2020 |
| | | KR 20190059249 A | 30-05-2019 |
| | | PL 3595060 T3 | 14-06-2021 |
| | | US 2020161650 A1 | 21-05-2020 |
| US 2020212423 A1 | 02-07-2020 | CN 110915035 A | 24-03-2020 |
| | | EP 3644415 A2 | 29-04-2020 |
| | | JP 2020528643 A | 24-09-2020 |
| | | KR 20190032126 A | 27-03-2019 |
| | | US 2020212423 A1 | 02-07-2020 |
| | | WO 2019059647 A2 | 28-03-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210038708

- KR 1020170093085